# EUROPÄISCHE PATENTSCHRIFT

(11) **EP 0 743 132 B1**
(45) Veröffentlichungstag und Bekanntmachung des Hinweises auf die Patenterteilung: **23.12.1998**
(21) Anmeldenummer: 96105981.3
(22) Anmeldetag: 17.04.1996
(51) Int. Cl.: B23K 37/04, B23K 26/00

(54) **Vorrichtung zum Verbinden von zwei Werkstücken**
Device for bonding two workpieces
Dispositif de jonction de deux pièces

(30) Priorität: 15.05.1995 CH 1406/95
(43) Veröffentlichungstag der Anmeldung: 20.11.1996
(73) Patentinhaber: ELPATRONIC AG, CH-6303 Zug (CH)
(72) Erfinder: Aebersold, Hans, 8903 Birmensdorf (CH); Urech, Werner, 8434 Kaiserstuhl (CH); Gross, Norbert, CH-8422 Pfungen (CH)

(56) Entgegenhaltungen:
- DE-C- 4 100 302
- FR-A- 1 274 607
- PATENT ABSTRACTS OF JAPAN vol. 009, no. 264 (M-423), 22.Oktober 1985 & JP-A-60 111796 (ISHIKAWAJIMA HARIMA JUKOGYO KK), 18.Juni 1985,

## Beschreibung

Die Erfindung betrifft eine Vorrichtung zum Verbinden von zwei Werkstücken durch Schweissen, wobei die Werkstücke auf Auflageflächen liegen, stumpf mit Randkanten unter Ausbildung einer Stossfuge aneinander stossen und andererseits der Auflageflächen mit Druck beaufschlagt sind.

Zum Verbinden von zwei Werkstücken, insbesondere bei der Herstellung von Karosserieteilen im Automobilbau, sind verschiedene Schweissverfahren bekannt. Zu erwähnen ist hier vor allem das Laserschweissen, wo die Blechteile in Stumpflage zu Platinen verschweisst werden.

Natürlich sind die miteinander zu verschweissenden Kanten der Bleche nicht absolut gerade, sondern besitzen eine gewisse Welligkeit. Entsprechend ist die Stossfuge nur dort geschlossen, wo sich aufgrund der Welligkeit die Kanten berühren; an anderen Stellen weichen die Kanten voneinander zurück, dort ist die Stossfuge offen. Beim Laserschweissen soll nun die Stossfuge nach Industriestandard in Europa eine Breite von 0,08 mm nirgends überschreiten. Diese sehr geringe zulässige Abweichung bedingt, dass die Kanten der zu verschweissenden Bleche vorbereitet werden. In der Regel wird dies durch ein Vorschneiden mittels Laserstrahl erreicht. Es ist aber auch durch ein Verfahren gemäss EP-A 0 565 846 erreichbar, wo die Bleche im Stumpfstoss positioniert und dann mindestens eine Kante plastisch gegen die andere hin verformt wird, sodass sich die Fuge schliesst, soweit, dass ihre grösste Breite 0,08 mm nicht mehr überschreitet.

Ein Schweissvorgang spielt sich in der Regel wie folgt ab:

Die Werkstücke werden paarweise, ohne vorbereitete Kanten, in Stumpflage und ohne wesentlichen Seitendruck positioniert und durch Klemmelemente fixiert. Es ist auch möglich, die Bleche gemäss FR-A- 127 4607 mit hilfe von Unterdruck auf einem Spanntisch zu fixieren. Hier findet eine erste Kraftbeeinflussung der Werkstücke statt. Jetzt können die Werkstücke weiterbehandelt, beispielsweise wie in der EP-A 0 565 846 beschrieben, geglättet werden, um die Stossfuge auf das zulässige Mass zu schliessen. Diese Weiterbehandlung bewirkt eine zweite Kraftbeeinflussung der Positionierung, wo erhebliche Seitenkräfte auftreten können. Schlussendlich kommt es infolge von Wärmespannungen beim Laserschweissen zu weiteren, insbesondere seitlich wirkenden Krafteinflüssen.

Diese Krafteinflüsse sind geeignet, die Stossfuge zu beeinflussen, insbesondere dann, wenn die Toleranzen in der Maschine eine Relativbewegung der zu verschweissenden Bleche zulassen. So auch dann, wenn die paarweise positionierten Bleche auf einem Spanntisch = Shuttle fixiert sind. Gerade auf einem Shuttle können mehrere zu verbindende Werkstückpaare festgelegt werden. Wird dann ein erstes Werkstückpaar behandelt, so wirkt sich der Krafteinfluss auch auf die anderen Werkstückpaare aus.

Konsequenterweise wäre die Schweissmaschine so zu konstruieren, dass die Toleranzen in der Maschine kleiner ausfallen als üblich; weiter wäre die Struktur festigkeitsmässig derart zu verbessern, dass die Kraftbeeinflussungen nicht mehr geeignet sind, die relative Lage der zu verschweissenden Bleche zu verändern.

Diese naheliegende Lösung führt aber zu einer äusserst aufwendigen Konstruktion.

Der vorliegenden Erfindung liegt die Aufgabe zugrunde, eine Vorrichtung der oben genannten Art zu entwickeln, bei welcher ein Öffnen der Stossfuge und (oder) eine Relativverschiebung der Werkstücke durch einfachste Mittel nach erfolgter Positionierung der Werkstücke vermieden bzw. verhindert wird.

Zur Lösung dieser Aufgabe führt, dass zumindest eine Auflagefläche dem Druck gegenüber nachgiebig ist und dabei ihre Lage in Richtung zur Stossfuge hin verändert.

Dies wird dadurch erreicht, dass die Auflagefläche zwar nachgiebig ausgebildet ist, sich aber nur auf einem vorgegebenen Bogen bewegen kann; die erlaubte Bewegungsrichtung läuft dann gegen den Spalt hin.

Werden nun die Bleche positioniert, was ohne grösseren Seitendruck geschieht, führt in einer Maschine gemäss dem Stand der Technik eine Kraftbeeinflussung möglicherweise dazu, dass sich die Stossfuge öffnet. Es kommt dann vor, dass der Schweissvorgang in der fehlerhaften Lage ausgeführt wird, was wiederum eine fehlerhafte Naht zur Folge hat.

Zur Beibehaltung der Position müssen die Werkstücke während dem Schweissvorgang in jedem Fall durch entsprechende Klemmelemente gehalten werden. Die vorliegende Erfindung macht sich den Druck dieser Klemmelemente zunutze, indem die gegenüber dem Druck nachgiebige Auflagefläche durch die gewollte Strukturelastizität gegen den Spalt hin ausweichen kann. Gegen den Spalt hin sind aber die positionierten Bleche an ihren in Stumpflage liegenden Kanten gegeneinander abgestützt.

Es ergibt sich also durch den Klemmdruck eine die Bleche seitlich zusammenpressende Kraft, welche einer Relativverschiebung der Bleche entgegensteht.

Diese Kraft wirkt natürlich erst, wenn sich alle entsprechenden Toleranzen in der Maschine in Richtung "Bewegung gegen den Spalt hin" geschlossen haben.

Mit anderen Worten:

Tritt eine Kraftbeeinflussung, wie einleitend erwähnt, auf, ändert sich die relative Lage der Bleche nicht mehr, da aufgrund der Strukturelastizität eine erhebliche die Fuge schliessende Seitenkraft wirkt und allfällige eine Relativverschiebung noch erlaubende Toleranzen in der Maschine durch die einseitige Beanspruchung bereits ausgeschöpft sind.

In einem der Ausführungsbeispiele ist vorgesehen, dass die Auflagefläche eine Oberfläche einer Platte oder eines Schenkels ist, die/der um eine Drehachse schwenkt. Die Drehachse ist fern der Stossfuge vorgesehen und befindet sich unterhalb einer Kante der Auflagefläche, so dass diese Kante beim Drehen der Platte bzw. des Schenkels um die Drehachse einen kurzen Kreisbogen beschreibt. Hierdurch kann ein Abstand zwischen den Randkanten von zwei Auflageflächen vermindert werden. Die zu verschweissenden Bleche stützen sich aneinander ab, so dass sich eine seitliche zusammenpressende Kraft aufbaut.

Zur Verbesserung der Haftung des Werkstücks gegenüber der Auflagefläche kann letztere mit einer reibschlüssigen Oberfläche belegt sein. Möglich ist auch noch die Zwischeneinschaltung einer Zwischenlage od.dgl., welche dann die eigentliche Auflagefläche für das Werkstück bildet, dessen Randkante dann noch weiter oberhalb der Drehachse liegt. Die positive Wirkung der Erfindung wird jedoch auch dort gewährleistet, wo sich die Auflagefläche durch den Klemmdruck tatsächlich nicht verschiebt, sich aber in jedem Fall, seitlich, über die in Stumpflage liegenden Kanten der Bleche, an der anderen Auflagefläche abstützt. Es baut sich auch dann die seitliche, fixierende Kraft auf, welche die Toleranzen in der Maschine aufhebt und den Wirkungen einer Kraftbeeinflussung entgegensteht, sodass sich die relative Lage der Bleche nicht mehr ändert.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht eines Teils einer erfindungsgemässen Vorrichtung zum Verbinden von zwei Werkstücken;
Figuren 2 bis 5 Seitenansichten von weiteren schematisch dargestellten Ausführungsbeispielen der erfindungsgemässen Vorrichtung gemäss Figur 1;
Figur 6 eine Draufsicht auf Teile der Vorrichtung gemäss Figur 5.

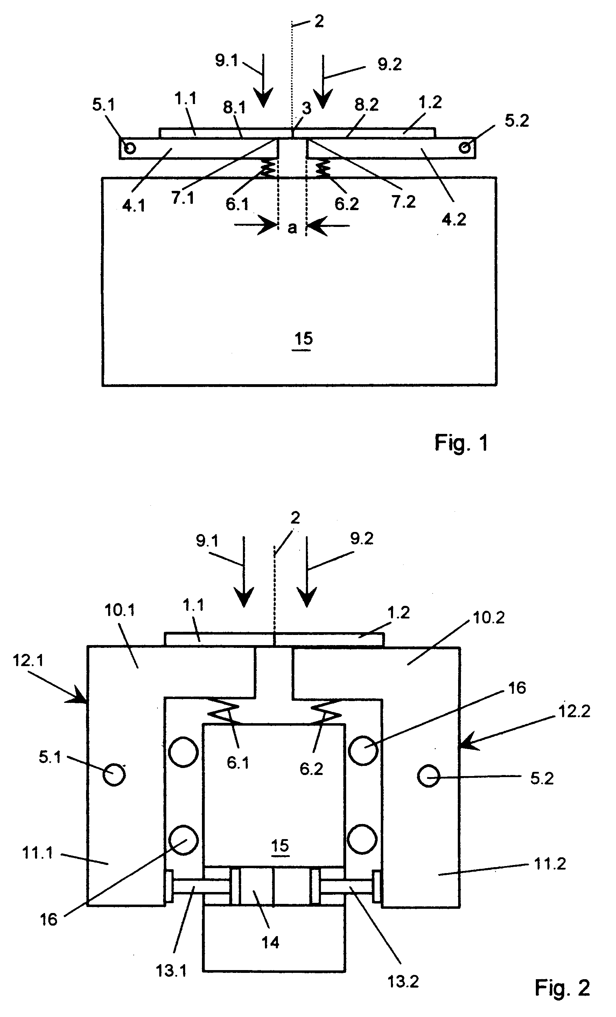

Gemäss Figur 1 sollen zwei Werkstücke 1.1 und 1.2 durch Schweissen miteinander verbunden werden. Im gezeigten Ausführungsbeispiel ist ein entsprechender Laserstrahl 2 gestrichelt angedeutet. Die Verbindung geschieht dabei im Bereich einer Stossfuge 3, welche durch die Randkanten der stumpf aneinander stossenden Werkstücke 1.1 und 1.2 gebildet wird.

Die beiden Werkstücke 1.1 und 1.2 liegen jeweils Platten 4.1 und 4.2 auf, wobei die Platten 4.1 und 4. 2 um jeweils eine Drehachse 5.1 und 5.2 in geringem Umfang schwenkbar sind. In Ausgangslage befinden sich die beiden Platten 4.1 und 4.2 in einer Ebene und werden in dieser Ebene durch entsprechende Kraftspeicher 6.1 und 6.2 gehalten. Dabei ist eine entsprechende Kante 7.1 und 7.2 der Platte 4.1 und 4.2 oberhalb der Drehachse 5.1 und 5.2 angeordnet. Die Platten 4.1 und 4.2 bilden so nachgiebige Auflageflächen 8.1 und 8.2 für die Werkstücke 1.1 und 1.2.

Wird nun ein Druck, wie durch die Pfeile 9.1 und 9.2 angedeutet, auf die Werkstücke 1.1 und 1.2 im Bereich nahe der Stossfuge 3 aufgebracht, so schwenken die Platten 4.1 und 4.2 in geringem Umfange um die Drehachsen 5.1 und 5.2. Da sich jedoch die Kanten 7.1 und 7.2 oberhalb der Drehachsen 5.1 und 5.2 befinden, beschreiben diese einen Kreisbogen um die Drehachsen 5.1 und 5.2, wobei sich ein Abstand a zwischen den beiden Kanten 7.1 und 7.2 verringert. Da gleichzeitig durch die Beaufschlagung der Werkstücke 1.1 und 1.2 mit Druck diese zwischen der entsprechenden Einrichtung zur Druckbeaufschlagung und den Platten 4.1 und 4.2 klemmend gehalten werden, können die Werkstücke 1.1 und 1.2 nicht seitlich ausweichen, so dass die Stossfuge 3 unter einer schliessenden Kraft steht und sich nicht öffnen kann. Hierdurch wird eine Relativbewegung der Bleche 1.1 und 1.2 verhindert.

Das Ausführungsbeispiel der erfindungsgemässen Vorrichtung zum Verbinden von zwei Werkstücken gemäss Figur 2 unterscheidet sich von demjenigen nach Figur 1 dadurch, dass anstelle der Platten 4 Schenkel 10.1 und 10.2 vorgesehen und mit senkrecht dazu verlaufenden Stützstreifen 11.1 und 11.2 verbunden sind. Die Schenkel 10.1 und 10.2 bilden zusammen mit den Stützstreifen 11.1 und 11.2 Winkelhebel, die um die Drehachsen 5.1 und 5.2 drehbar angeordnet sind.

Der Vorteil dieser Anordnung ist, dass diese Winkelhebel 12.1 und 12.2 zusätzlich zu einem Druck 9.1 und 9.2 auf die Werkstücke 1.1 und 1.2 um die Drehachsen 5.1 und 5.2 gedreht werden können, was insbesondere im Hinblick auf die Toleranzen in der Maschine vorteilhaft sein kann. Im vorliegenden Ausführungsbeispiel werden hierzu die beiden Stützstreifen 11.1 und 11.2 an ihrem freien Ende von entsprechenden Stösseln 13.1 und 13.2 angegriffen. Die Stössel 13.1 und 13.2 können dabei Teil einer Kolben-Zylinder-Einheit 14 sein. Diese Kolben-Zylinder-Einheit 14 befindet sich in einem Maschinentisch 15, gegen den sich die Winkelhebel 12.1 und 12.2 über entsprechende Abstützelemente 16 bzw. die oben erwähnten Kraftspeicher 6.1 und 6.2 abstützen.

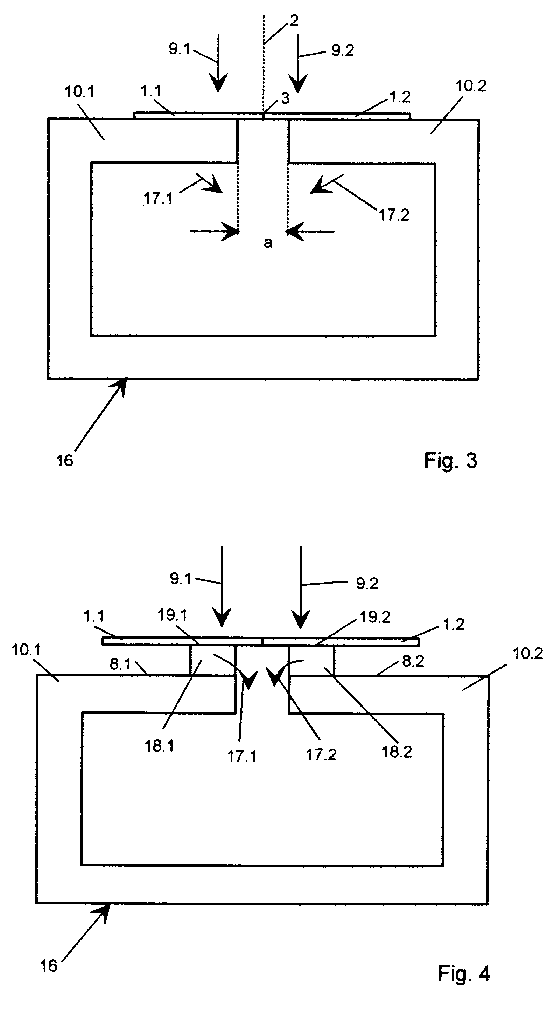

In dem Ausführungsbeispielen gemäss den Figuren 3 und 4 sind die Schenkel 10.1 und 10.2 über einen U-förmigen Bügel 16 miteinander verbunden, so dass sich die Drehachsen 5.1 und 5.2 erübrigen. Bevorzugt sind die Schenkel 10.1 und 10.2 mit dem Bügel 16 einstückig verbunden, so dass die Nachgiebigkeit bereits durch das Material des Bügels 16 bestimmt wird. Hierdurch vollziehen die Schenkel 10.1 und 10.2 bzw. deren Auflageflächen für die Werkstücke 1.1 und 1.2 auch keine Kreisbogenbewegung um einen Drehpunkt herum, sondern eine zur Stossfuge 3 hin gerichtete Schwenkbewegung, wie dies durch die Pfeile 17.1 und 17.2 angedeutet ist. Die in vorbestimmter Weise wirkende Strukturelastizität der Maschine löst somit die Aufgabe der Erfindung.

In Figur 4 ist noch zusätzlich angedeutet, dass zwischen der Auflagefläche 8.1 bzw. 8.2 und dem Werkstück 1.1 und 1.2 eine Platte 18.1 bzw. 18.2 eingelegt sein kann. Diese Platte besitzt bevorzugt eine reibschlüssige Oberfläche 19.1 bzw. 19.2, so dass die Werkstücke 1.1 und 1.2 gegenüber diesen Oberflächen 19.1 und 19.2 nicht seitlich verschoben werden können. Diese Platten 18 mit den reibschlüssigen Oberflächen 19 können im übrigen bei allen Ausführungen der Erfindung Anwendung finden.

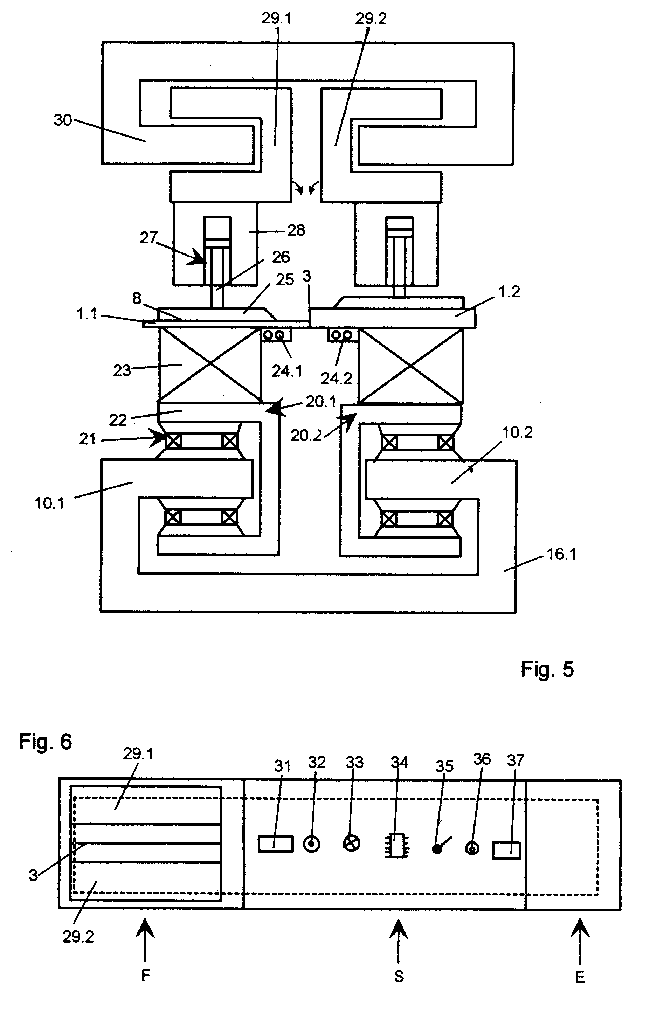

In dem Ausführungsbeispiel gemäss Figur 5 ist als Bügel ein Maschinenkasten 16.1 erkennbar. Jeder Schenkel 10.1 und 10.2 dieses Maschinenkastens 16.1 wird teilweise von einem C-förmigen Spanntischteil 20.1 und 20.2 umfasst. Dabei stützt sich jedes Spanntischteil 20.1 bzw. 20.2 über ein Lager 21 von oben und von unten her gegen den jeweiligen Schenkel 10.1 und 10.2 ab. Die Lager 21 erlauben, dass die Spanntischteile 20.1 und 20.2 in Längsrichtung der Vorrichtung verfahren werden können, wobei in der Regel die Spanntischteile 20.1 und 20.2 miteinander zu einem gemeinsamen Shuttle verbunden sind.

Auf einer Tischplatte 22 des Spanntischteils 20.1 bzw. 20.2 liegt ein Magnet bzw. eine Mehrzahl von Magneten 23 auf, welche eine Auflagefläche 8 für das Werkstück 1.1 bzw. 1.2 bilden. Diese Werkstücke 1.1 und 1.2 stossen im Bereich einer Stossfuge 3 stumpf aneinander. Links und rechts neben der Stossfuge sind bevorzugt Kühleinrichtungen 24.1 und 24.2 angeordnet, welche von entsprechenden Kühlkanälen für ein Kühlmedium durchzogen sind. Diese Kühleinrichtungen 24 erlauben ein Abkühlen einer Schweissnaht, welche die beiden Werkstücke 1.1 und 1.2 miteinander verbindet.

Auf jedem Werkstück 1.1 bzw. 1.2 sitzt ein Pressschuh 25 auf, über welchen der Druck 9 auf das jeweilige Werkstück 1.1 bzw. 1.2 aufgebracht wird. Dabei steht der Pressschuh 25 über eine Kolbenstange 26 mit einer hydraulischen oder pneumatischen Kolben-Zylinder-Einheit 27 in Verbindung, die wiederum in einem Block 28 aufgenommen ist.

Der Block 28 hängt vorzugsweise, aber nicht zwingend, an einem C-förmigen Bügel 29, der, nicht näher gezeigt, so an einer Aufhängung 30 gelagert ist, dass bei einem Nachgeben der Schenkel 10.1 und 10.2 die beiden Bügel 29.1 und 29.2 ebenfalls in geringem Umfang zueinander geschwenkt werden können.

Gemäss Figur 6 ist erkennbar, dass der Shuttle, von dem lediglich die beiden Bügel 29.1 und 29.2 erkennbar sind, durch die gesamte Vorrichtung läuft. Im Augenblick befindet er sich in einer Beladestation F, von dieser gelangt er in eine Schweissstation S und aus dieser in eine Entladestation E, aus der die zusammengeschweissten Werkstücke entnommen werden.

In der Schweisstation findet bevorzugt ein Glätten der Stossfuge durch eine Glätteinrichtung 31 statt, wie dies in der EP-A 565 846 beschrieben ist. Auf die Glätteinrichtung 31 folgt bevorzugt eine Spaltüberprüfung 32, mit welcher ein nachfolgender Laserstrahl 2 dem Spaltverlauf nachgeführt werden kann.

Nach dem Verschweissen der Stossfuge durch den Laser 33 wird bevorzugt die Schweissnaht in einer Bürsteinrichtung 34 nachbehandelt und in einer Kühlstation 35 geölt. Darauf folgt eine Qualitätskontrolle 36 und ggfs. ein Nachglätten 37.

Alle diese Behandlungen durchlaufen die Werkstücke 1.1 und 1.2 eingespannt in dem Shuttle.

## Patentansprüche

1. Vorrichtung zum Verbinden von zwei Werkstücken (1.1, 1.2) durch Schweissen, wobei die Werkstücke auf Auflageflächen (8.1, 8.2) liegen, stumpf mit Randkanten unter Ausbildung einer Stossfuge (3) aneinanderstossen und andererseits der Auflageflächen (8.1, 8.2) mit Druck (9.1, 9.2) beaufschlagt sind,
dadurch gekennzeichnet,
dass zumindest eine Auflagefläche (8.1, 8.2) dem Druck (9.1, 9.2) gegenüber nachgiebig ist und dabei ihre Lage in Richtung zur Stossfuge (3) hin verändert.

2. Vorrichtung nach Anspruch 1, dadurch gekennzeichnet, dass die Auflagefläche (8.1, 8.2) eine Oberfläche einer Platte (4.1, 4.2) oder eines Schenkels (10.1, 10.2) ist, die/der um eine Drehachse (5.1, 5.2) schwenkt, wobei die Drehachse (5.1, 5.2) fern der Stossfuge (3) angeordnet ist.

3. Vorrichtung nach Anspruch 2, dadurch gekennzeichnet, dass eine der Stossfugen (3) nahe Kante (7.1, 7.2) der Auflagefläche (8.1 8.2) oberhalb der Drehachse (5.1, 5.2) angeordnet ist.

4. Vorrichtung nach einem der Ansprüche 1 - 3, dadurch gekennzeichnet, dass zwischen Auflagefläche (8.1, 8.2) und Werkstück (1.1, 1.2) noch eine Platte (18.1, 18.2) eingelegt ist.

5. Vorrichtung nach Anspruch 4, dadurch gekennzeichnet, dass die Platte (18.1, 18.2) eine reibschlüssige Oberfläche (19.1, 19.2) gegenüber dem Werkstück (1.1, 1.2) aufweist.

6. Vorrichtung nach einem der Ansprüche 2 - 5, dadurch gekennzeichnet, dass sich an den Schenkel (10.1, 10.2) jenseits der Drehachse (5.1, 5.2) ein im Winkel zum Schenkel (10.1, 10.2) verlaufender Stützstreifen (11.1, 11.2) anschliesst.

7. Vorrichtung nach Anspruch 6, dadurch gekennzeichnet, dass der Stützstreifen (11.1, 11.2) andernends mit Druck (13.1, 13.2) beaufschlagbar ist.

8. Vorrichtung nach einem der Ansprüche 1 - 7, dadurch gekennzeichnet, dass die Auflagefläche (8.1, 8.2) dem Druck (9.1, 9.2) gegen einen Gegendruck (6.1, 6.2) nachgibt.

9. Vorrichtung nach einem der Ansprüche 1 - 8, dadurch gekennzeichnet, dass sich zwei Auflageflächen (8.1, 8.2) als Oberflächen zweier Schenkel (10.1, 10.2) in einer Ebene gegenüberliegen, wobei beide Schenkel (10.1, 10.2) über einen U-förmigen Bügel (16) miteinander verbunden sind.

10. Vorrichtung nach Anspruch 9, dadurch gekennzeichnet, dass die Verbindung zwischen den Schenkeln (10.1, 10.2) und dem Bügel (16) einstückig erfolgt, wobei zwischen freien Seitenkanten der Schenkel ein Abstand (a) besteht.

11. Vorrichtung nach Anspruch 10, dadurch gekennzeichnet, dass an den Schenkeln (10.1, 10.2) jeweils ein Spanntischteil (20.1, 20.2) eines Shuttles verfahrbar angeordnet ist.

12. Vorrichtung nach Anspruch 11, dadurch gekennzeichnet, dass auf einem Tisch (22) eines Spanntischteils (20.1, 20.2) ein oder mehrere Magnete (23) aufliegen, welche die seitliche Fixierung (8) für das Werkstück (1.1, 1.2) unterstützen.

13. Vorrichtung nach Anspruch 12, dadurch gekennzeichnet, dass auf dem Werkstück (1.1, 1.2) ein vorzugsweise ferromagnetischer Pressschuh (25) aufsitzt.

## Claims

1. Apparatus for joining two workpieces (1.1, 1.2) together by welding, in which the workpieces lie on supporting surfaces (8.1, 8.2), are butted together at their edges to form a butt joint (3), and are subjected to pressure (9.1, 9.2) on the opposite side to the supporting surfaces (8.1, 8.2),
characterized in that
at least one supporting surface (8.1, 8.2) is capable of yielding under pressure (9.1, 9.2) and, in so doing, of changing its position towards the butt joint (3).

2. Apparatus according to Claim 1, characterized in that the supporting surface (8.1, 8.2) is a surface of a platen (4.1, 4.2) or limb (10.1, 10.2) which tilts or rocks about a pivot axis (5.1, 5.2), the pivot axis (5.1, 5.2) being remote from the butt joint (3).

3. Apparatus according to Claim 2, characterized in that an edge (7.1, 7.2) of the supporting surface (8.1, 8.2) close to the butt joints (3) is located above the pivot axis (5.1, 5.2).

4. Apparatus according to any one of Claims 1 - 3, characterized in that an additional platen (18.1, 18.2) is placed between the supporting surface (8.1, 8.2) and the workpiece (1.1, 1.2).

5. Apparatus according to Claim 4, characterized in that the platen (18.1, 18.2) has a high-fraction surface (19.1, 19.2) on the side facing the workpiece (1.1, 1.2).

6. Apparatus according to any one of Claims 2 - 5, characterized in that a supporting web (11.1, 11.2) is joined to the limb (10.1, 10.2) beyond the pivot axis (5.1, 5.2) and extends at an angle to the limb (10.1, 10.2).

7. Apparatus according to Claim 6, characterized in that the supporting web (11.1, 11.2) can be acted on by pressure (13.1, 13.2) at its other end.

8. Apparatus according to any one of Claims 1 - 7, characterized in that the supporting surface (8.1, 8.2) yields under pressure (9.1, 9.2) against a counteracting pressure (6.1, 6.2).

9. Apparatus according to any one of Claims 1 - 8, characterized in that two supporting surfaces (8.1, 8.2) lie opposite one another in one plane as surfaces of two limbs (10.1, 10.2) which are joined to one another by a U-shaped yoke (16).

10. Apparatus according to Claim 9, characterized in that the limbs (10.1, 10.2) and yoke (16) are joined in one piece, with a gap (a) between free lateral edges of the limbs.

11. Apparatus according to Claim 10, characterized in that a clamping table section (20.1, 20.2) of a shuttle is arranged on each of the limbs (10.1, 10.2) so that it can be traversed thereon.

12. Apparatus according to Claim 11, characterized in that a magnet or magnets (23) lie(s) on a table (22) of [each] clamping table section (20.1, 20.2), and support(s) the lateral fixing (8) for the workpiece (1.1, 1.2).

13. Apparatus according to Claim 12, characterized in that a preferably ferromagnetic press shoe (25) rests on the workpiece (1.1, 1.2).

## Revendications

1. Dispositif pour relier deux pièces (1.1, 1.2) par soudage, dans lequel les pièces sont situées sur des surfaces d'appui (8.1, 8.2), sont en aboutement au niveau de bords marginaux en formant un joint d'aboutement (3) et sont chargés, de l'autre côté des surfaces d'appui (8.1, 8.2) par une pression (9.1, 9.2),
caractérisé en ce
qu'au moins une surface d'appui (8.1, 8.2) peut fléchir à l'opposé de la pression (9.1, 9.2) et que sa position varie en direction du joint d'aboutement (3).

2. Dispositif selon la revendication 1, caractérisé en ce que la surface d'appui (8.1, 8.2) est une surface supérieure d'une plaque (4.1, 4.2) ou d'une branche (10.1, 10.2), qui pivote autour d'un axe de rotation (5.1, 5.2), l'axe de rotation (5.1, 5.2) étant situé dans une position éloignée du joint d'aboutement (3).

3. Dispositif selon la revendication 2, caractérisé en ce que l'un des joint d'aboutement (3) est disposé à proximité du bord (7.1, 7.2) de la surface d'appui (8.1, 8.2) au-dessus de l'axe de rotation (5.1, 5.2).

4. Dispositif selon l'une des revendications 1-3, caractérisé en ce qu'une plaque (18.1, 18.2) est en outre insérée entre la surface d'appui (8.1, 8.2) et la pièce (1.1, 1.2).

5. Dispositif selon la revendication 4, caractérisé en ce que la plaque (18.1, 18.2) possède une surface de friction (19.1, 19.2) en vis-à-vis de la pièce (1.1, 1.2).

6. Dispositif selon l'une des revendications 2-5, caractérisé en ce qu'à chaque branche (10.1, 10.2) se raccorde, au-delà de l'axe de rotation (5.1, 5.2), une bande de support (11.1, 11.2) qui fait un angle par rapport à la branche (10.1, 10.2).

7. Dispositif selon la revendication 6, caractérisé en ce que la bande de support (11.1, 11.2) peut être chargée, à son autre extrémité, par une pression (13.1, 13.2).

8. Dispositif selon l'une des revendications 1-7, caractérisé en ce que la surface d'appui (8.1, 8.2) fléchit sous l'action de la pression (9.1, 9.2) à l'encontre d'une contre-pression (6.1, 6.2).

9. Dispositif selon l'une des revendications 1-8, caractérisé en ce que deux surfaces d'appui (8.1, 8.2) constituant en tant que surfaces supérieures de deux branches (10.1, 10.2) sont situées en vis-à-vis dans un plan, les deux branches (10.1, 10.2) étant reliées entre elles par l'intermédiaire d'un étrier en forme de U (16).

10. Dispositif selon la revendication 9, caractérisé en ce que la liaison entre les branches (10.1, 10.2) et l'étrier (16) est réalisée d'un seul tenant, une distance (a) étant présente entre des bords latéraux libres des branches.

11. Dispositif selon la revendication 10, caractérisé en ce qu'un élément de table de serrage respectif (20.1, 20.2) d'une navette est disposé de manière à être déplaçable sur les branches (10.1, 10.2).

12. Dispositif selon la revendication 11, caractérisé en ce que sur une table (22) d'une partie (20.1, 20.1) de table de serrage sont disposés un ou plusieurs aimants (23), qui assistent la fixation latérale (8) pour la pièce (1.1, 1.2).

13. Dispositif selon La revendication 12, caractérisé en ce qu'un patin de serrage (25) de préférence ferromagnétique est appliqué sur une pièce (1.1, 1.2)
